# DEMANDE DE BREVET EUROPEEN

(11) **EP 4 227 919 A1**
(43) Date de publication de la demande: **16.08.2023**
(21) Numéro de dépôt: 22305142.6
(22) Date de dépôt: 09.02.2022
(51) Int. Cl.: G07D 7/023, G09C 1/00, H04L 9/32

(54) **OBJET ANTI-CONTREFAÇON, SON PROCÉDÉ DE FABRICATION ET SON UTILISATION**

(71) Demandeur: Centre National de la Recherche Scientifique, 75016 Paris (FR); Université de Lorraine, 54000 Nancy (FR)
(72) Inventeur: Kenzari, Samuel, 54200 Andilly (FR)
(74) Mandataire: Office Freylinger

(57) **Abrégé**

Un objet anti-contrefaçon est construit en fabrication additive par dépôt à l'état fondu d'une première matière isolante électriquement. Il comporte au moins un conducteur (15, 16, 17) en une deuxième matière conductrice intégré dans la première matière, le conducteur (15, 16, 17) reliant au moins deux bornes (11, 12, 13, 14) accessibles et ayant une résistance caractéristique mesurable entre les bornes (11, 12, 13, 14).

Procédé d'authentification dudit objet.

## Description

### Domaine technique

L'invention concerne un objet anti-contrefaçon dont on puisse déterminer s'il a été fabriqué de manière authentique. Elle concerne également le procédé de fabrication de cet objet anti-contrefaçon et le procédé d'authentification permettant de déterminer si l'objet est authentique.

### Technique antérieure

La contrefaçon est un problème constant qui grandit dans son étendue et dans son amplitude. C'est une question permanente dans le monde des affaires à cause de son impact sur les ventes, sur la valeur et la réputation des entreprises, ainsi que sur la possibilité de bénéficier des innovations technologiques. Les consommateurs sont également des victimes de la contrefaçon quand on leur fournit un produit différent de ce pour quoi ils ont payé et, notamment pour les biens mécaniques ou les médicaments, en ce qu'ils encourent des risques pour leur santé et leur sécurité. Au niveau des états, la contrefaçon est une préoccupation des gouvernements en ce qui concerne la sécurité et la santé des citoyens, l'impact négatif qu'il peut avoir sur l'innovation, et les ressources conséquentes qui sont détournés par les réseaux criminels, le crime organisé ou d'autres groupes qui désorganisent la société. On dispose actuellement de multiples technologies qui peuvent être utilisés dans la lutte anti contrefaçon. Par exemple les nanotechnologies et d'autres technologies avancées ont ouvert la porte à de nouvelles voies de protection des marques, au marquage et au traçage de produits. Ces technologies permettent de conférer une empreinte individuelle au produit sans l'affecter ou à son emballage. C'est ainsi que la publication « Nano and other Innovative Anti-Counterfeit Technologies » publiée par le « Technoloy Transfer Centre » en avril 2016 décrit plus de quarante solutions pour l'essentiel très récentes.

Les options technologiques de lutte anti contrefaçon actuelles comprennent une gamme de mesures visibles ou non visibles qui permettent l'authentification de produits. Le marché de la lutte anti contrefaçon se divise essentiellement en deux segments, l'un concernant les technologies d'authentification, l'autre concernant les technologies de traçage.

Ces technologies incluent les numéros de série les codes-barres, les codes matriciels et les puces RFID pour l'identification, et les hologrammes, les solutions biométriques, les filigranes et les marquages pour la sécurité. Ces technologies ont leurs propres limitations à différents niveaux et sont rarement infaillibles.

Le document WO 2019/011986 A1 montre une méthode d'identification d'un objet en incluant dans cet objet une substance qui est observable par rayons X et dont le spectre d'analyse est spécifique et non reproductible.

Même si cette méthode permet un haut degré de fiabilité, elle a l'inconvénient de nécessiter des moyens d'analyse peu courants.

### Exposé de l'invention

C'est donc un premier objectif de l'invention de fournir un objet qui puisse être authentifié. C'est un autre objectif de fournir une méthode permettant de fabriquer un tel objet. C'est aussi un autre objectif de fournir une méthode permettant d'authentifier un objet.

Avec ces objectifs en vue, l'invention vise à protéger un objet anti-contrefaçon construit en fabrication additive par dépôt à l'état fondu d'une première matière isolante électriquement, caractérisé en ce qu'il comporte au moins un conducteur en une deuxième matière conductrice intégré dans la première matière, le conducteur reliant au moins deux bornes accessibles et ayant une résistance caractéristique mesurable entre les bornes.

La fabrication additive par dépôt de fil fondu permet de réaliser des objets unitaires. Lors de cette fabrication l'incorporation d'un conducteur permet de conférer une caractéristique spécifique à l'objet. Cette caractéristique pourra être reconnue afin de justifier que cet objet est bien authentique. En pratique, on incorporera plusieurs conducteurs dans l'objet afin de multiplier les combinaisons possibles sur les valeurs de résistance. La valeur de la résistance est accessible avec peu de moyens ce qui permet de réaliser un contrôle facilement, avec un simple ohmmètre. L'objet anti-contrefaçon peut-être le produit lui-même, une pièce intégrée dans le produit à authentifier ou une pièce intégrée dans l'emballage. Même s'il est possible en théorie de reproduire un objet ayant les mêmes valeurs de résistance, en pratique une telle technique de fabrication a une forte dispersion et il est difficile d'obtenir un résultat parfaitement prédit. Cette difficulté n'apparaît pas pour le fabricant du produit authentique puisque celui-ci ne va pas chercher à obtenir une valeur précise, mais simplement une valeur spécifique, contrôlable à posteriori.

Selon une disposition constructive, au moins l'une des bornes est commune à deux conducteurs. On limite ainsi le nombre de bornes à rendre accessible depuis l'extérieur de l'objet. Il est cependant possible de munir chaque conducteur de borne à chaque extrémité.

Selon une disposition constructive, la deuxième matière comporte une matrice de matière thermoplastique et une charge sous forme de particules conductrices. Cette matière peut être ainsi mise en oeuvre par la technologie du fil fondu. Ce composite est rendu conducteur par le fait que les particules conductrices viennent en contact les unes avec les autres dans la matrice de matière thermoplastique. Les particules conductrices peuvent être en particulier à base de carbone, par exemple du graphène ou des nanotubes de carbone. Une telle seconde matière est par exemple commercialisée sous le nom « Proto-Pasta » par la société ProtoPlant. La matière thermoplastique dans ce cas est du PLA et la charge conductrice est du noir de carbone sous forme de nanoparticules.

Selon une caractéristique, la valeur de résistance est supérieure à 1 kΩ, de préférence supérieure à 10 kΩ. Ces valeurs sont aisément mesurables avec des appareils simples. De valeurs basses de résistance sont plus difficiles à obtenir et ne présentent pas d'intérêt en l'occurrence.

L'invention a aussi pour objet un procédé de fabrication d'un objet anti-contrefaçon tel que décrit précédemment, selon lequel on dépose une pluralité de couches à l'état fondu de la première matière isolante électriquement, et on dépose en outre la deuxième matière conductrice pour réaliser au moins un conducteur intégré dans la première matière reliant au moins deux bornes accessibles. Typiquement on fabrique la pièce en impression 3D avec au moins deux têtes d'impression, une première tête pour la première matière isolante et une deuxième tête pour la deuxième matière conductrice. L'essentiel de la pièce réalisée avec la première matière, tandis que l'on insère dans la réalisation des couches un conducteur déposé par la deuxième tête. Chaque objet est réalisé de manière unique.

L'invention a aussi pour objet un procédé de fabrication, selon lequel on fabrique un lot d'objets comme décrit précédemment, et on modifie, d'un objet à l'autre, au moins l'un des paramètres pour au moins l'un des conducteurs dans un groupe comprenant le parcours du conducteur, la section du conducteur sur au moins une partie du parcours, la matière du conducteur, et un nombre de passes de réalisation du conducteur, de sorte à modifier la valeur de résistance dudit conducteur. On module ainsi les propriétés de chacun des objets construits pour que les valeurs de résistance des conducteurs soit spécifiques à chacun des objets. On influe sur tous les paramètres qui peuvent déterminer la résistance du conducteur, que ce soit le parcours notamment la longueur, la section en réalisant un dépôt plus ou moins important, ou alors en réalisant plusieurs passes côte à côte sur une même couche ou superposées dans des couches adjacentes. On peut également faire varier la matière qui est utilisée, par exemple en utilisant plusieurs têtes contenant chacune une matière distincte.

L'invention a également pour objet un procédé d'authentification d'un objet parmi le lot d'objets fabriqués comme décrit précédemment, selon lequel, pour chaque objet du lot, on mesure la valeur de résistance de chaque conducteur entre les bornes après la fabrication et on tient un registre en créant un enregistrement des valeurs mesurées pour l'objet, puis on considère que l'objet à authentifier est authentique si les valeurs de résistance mesurées pour chacun des conducteurs dudit objet à authentifier correspondent aux valeurs de l'un des enregistrements du registre. Celui qui a fabriqué les objets et a établi le registre est à même de déterminer si l'un des objets sur lequel on fait les mesures de résistance est un objet qu'il a fabriqué, en comparant les mesures avec les valeurs dans les registres. La comparaison est réalisée avec une tolérance pour tenir compte l'incertitude de mesure. Cette tolérance est par exemple comprise entre 1 et 5 %. Pour établir la comparaison, on pourra se baser sur des rapports de résistances.

L'invention a aussi pour objet un procédé d'authentification d'un objet parmi le lot d'objets fabriqués selon le procédé tel que décrit précédemment, selon lequel on utilise un dispositif de contrôle comportant autant de connecteurs que l'objet a de bornes, le dispositif étant configuré pour que chaque connecteur soit en contact avec l'une des bornes de l'objet dans une position de contrôle, le dispositif de contrôle comportant au moins un testeur de continuité électrique entre au moins deux connecteurs, le testeur donnant une indication positive lorsqu'il détecte une continuité électrique fournie par l'objet entre deux connecteurs. Ce procédé, qui peut être mis en oeuvre de manière complémentaire au précédent, par exemple en préliminaire, de manière à détecter des reproductions grossières qui ne comporteraient pas de conducteur entre les bornes attendues. Le dispositif de contrôle est construit par exemple au moins en partie avec le même procédé de fabrication que décrit précédemment.

Selon un perfectionnement du procédé, les bornes sont réparties selon un motif répété régulièrement autour d'un axe de manière à répéter des positions de contrôle, et on considère que l'objet est valide si chaque testeur donne une indication positive ou négative prédéterminée pour chacune des positions de contrôle du dispositif de contrôle. Il existe ainsi une pluralité de positions de contrôle dans lesquelles le dispositif de contrôle peut entrer en contact avec les bornes. Au moins l'une des positions permet le test. Sur l'ensemble des positions de contrôle, on peut avoir prédéterminé quels doivent être les résultats des testeurs, et les comparer aux tests effectivement réalisés sur l'objet.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en perspective d'un objet conforme à l'invention ;
- la figure 2 est une vue similaire à la figure 1 d'un autre objet conforme à l'invention
- la figure 3 est une vue de face d'un objet conforme à l'invention selon un deuxième mode de réalisation ;
- la figure 4 est une vue d'un dispositif de contrôle pour l'objet de la figure 3.
- la figure 5 est une vue similaire à la figure 3 selon un troisième mode de réalisation ;
- la figure 6 est une vue similaire à la figure 3 selon un quatrième mode de réalisation.

### Description détaillée

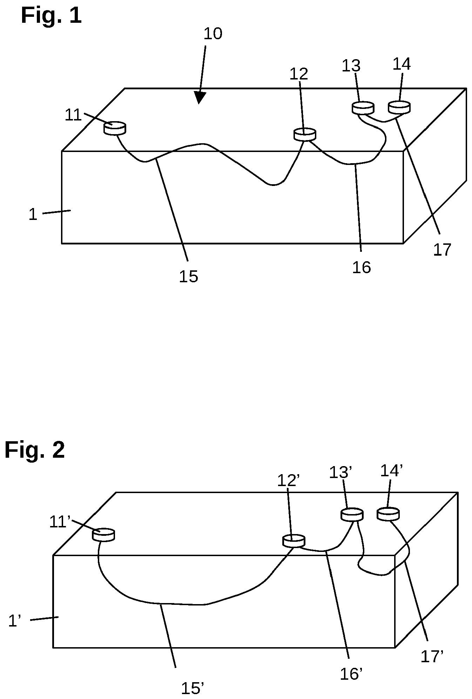

Un objet 1 conforme à un premier mode de réalisation de l'invention est montré sur la figure 1. Cet objet 1 présente une forme parallélépipédique avec notamment une face supérieure 10 sur laquelle affleurent quatre bornes 11, 12, 13, 14. Un premier conducteur 15 relie une première et une deuxième des bornes 11, 12. Un deuxième conducteur 16 relie la deuxième borne 12 à une troisième des bornes 13. Un troisième conducteur 17 relie la troisième à une quatrième des bornes 13, 14. La résistance de chacun des trois conducteurs 15, 16, 17 peut être mesurée entre les bornes 11, 12, 13, 14 qui relient les extrémités du conducteur à mesurer, par exemple entre la première et la deuxième borne 11, 12 pour le premier conducteur 15. La valeur de résistance est presque toujours supérieure à 1 kΩ, souvent supérieure à 10 kΩ, voire supérieure à 100 kΩ.

L'objet 1 est fabriqué par fabrication additive par dépôt de fil fondu. Une première strate est déposée sur un plateau pour former la face inférieure, opposée à la face supérieure 10. Des strates sont formées ensuite par-dessus la strate précédente et parallèlement à celle-ci, l'empilement des strates réalisant ainsi l'objet 1 complet.

L'essentiel de la pièce est réalisé par le dépôt d'une première matière thermoplastique isolante, par exemple du PLA, de l'ABS, du PETG, du PA ou du PEEK. Les conducteurs sont intégrés dans ces strates par le dépôt d'une deuxième matière conductrice distincte de la première matière. Le dépôt peut être fait sous la forme d'un cordon continu, de plusieurs cordons contigus sur la même strate ou sur des strates superposées, ou de portions de cordons contigus en contact continu. La deuxième matière comporte une matrice de matière thermoplastique et une charge sous forme de particules conductrices telles que des nanoparticules de carbone ou de graphène. Les bornes 11, 12, 13, 14 sont réalisées également avec cette deuxième matière.

On fabrique de tels objets par lot, et on modifie, d'un objet 1 à l'autre, au moins un paramètre pour au moins l'un des conducteurs 15, 16, 17 de sorte à modifier la valeur de résistance dudit conducteur. Les paramètres qui peuvent être modifiés sont le parcours du conducteur, la section du conducteur sur au moins une partie du parcours, la matière du conducteur, et un nombre de passes de réalisation du conducteur. Dans l'exemple de l'objet 1' montré sur la figure 2, les parcours des trois conducteurs 15', 16', 17' ont été modifiés par rapport à l'exemple de la figure 1, alors que les bornes 11', 12', 13', 14' sont à la même place.

Pour chaque objet du lot, on mesure la valeur de résistance de chacun des trois conducteurs entre les bornes après la fabrication. Dans un registre, on crée un enregistrement avec les trois valeurs mesurées pour l'objet.

Lorsque l'on souhaite déterminer si un objet à authentifier est authentique, on mesure les valeurs de résistance pour chacun des conducteurs dudit objet et on les compare aux valeurs des enregistrements du registre. On considère que l'objet à authentifier est authentique s'il existe un enregistrement pour lequel les trois valeurs de résistance mesurées correspondent à celle de l'enregistrement. L'objet peut être le produit lui-même que le consommateur achète et qu'il souhaite garanti par la fabrication. Il peut effectuer lui-même ou à l'aide d'un revendeur les mesures de résistance, lesquelles seront soumises au fabricant qui détient le registre et qui pourra en retour indiquer si l'objet est authentique. L'objet peut alternativement être incorporé au produit, d'une manière telle que son extraction ne soit possible qu'en cassant une partie du produit ou de l'objet. L'objet peut aussi être intégré à un contenant ou à un emballage du produit.

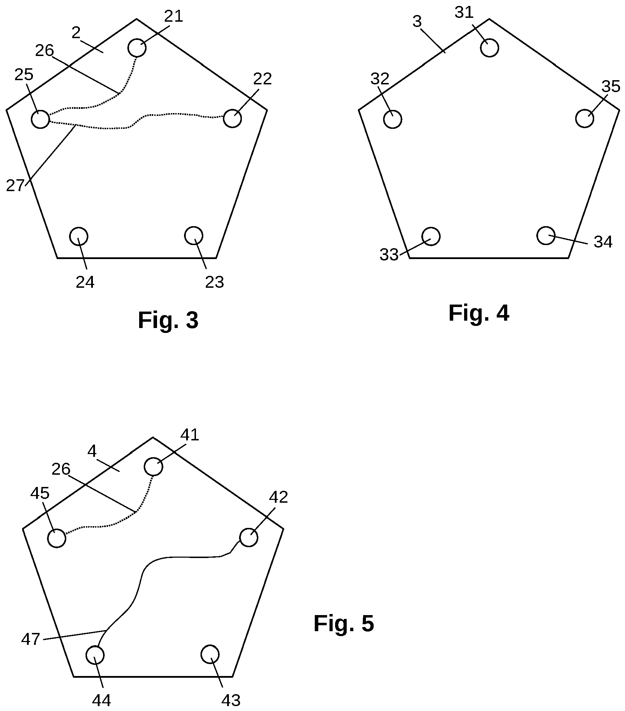

Un objet 2 selon un deuxième mode de réalisation de l'invention est représenté sur la figure 3. Cet objet 2 est sensiblement de la forme d'une plaque de forme pentagonale. Cinq bornes 21, 22, 23, 24, 25 sont prévues affleurantes sur la face vue sur la figure 3, réparties de manière régulière aux sommets d'un pentagone inscrit dans le contour de la plaque. Les bornes sont réparties selon un motif répété régulièrement autour du centre du pentagone. Des conducteurs 26, 27 relient respectivement les bornes 21, 25 et 22, 25.

Un dispositif de contrôle 3, tel que représenté sur la figure 4, est également sensiblement de la forme d'une plaque de forme pentagonale. Cinq connecteurs 31, 32, 33, 34, 35 font saillie de la surface pour venir en contact respectivement avec les bornes 21, 22, 23, 24, 25 de l'objet 2 en plaçant l'objet 2 et le dispositif de contrôle 3 en vis-à-vis l'un de l'autre. Le dispositif de contrôle comporte un testeur de continuité électrique entre le connecteur 35 et le groupe des connecteurs 31 et 32. Lorsque les connecteurs sont plaqués contre les bornes dans une première position, un contact électrique est établi entre le connecteur 31 et la borne 21, entre le connecteur 32 et la borne 22, entre le connecteur 35 et la borne 25. Le testeur donne alors une indication positive parce qu'il détecte une continuité électrique passant par le connecteur 35, la borne 25, le conducteur 26, la borne 21 et le connecteur 31. L'indication positive vient aussi de la continuité électrique détectée en passant par le connecteur 35, la borne 25, le conducteur 27, la borne 22 et le connecteur 32. Lorsqu'on tourne le dispositif de contrôle d'un cinquième de tour dans le sens horaire pour atteindre une deuxième position, le connecteur 35 est en contact avec la borne 21, le connecteur 31 est en contact avec la borne 22, etc. Le testeur donne alors une indication positive parce qu'il détecte une continuité électrique passant par le connecteur 35, la borne 21, le conducteur 26, le conducteur 27, la borne 22 et le connecteur 31.

Toutes les autres positions donnent une indication négative. Dans la pratique, il suffit que deux connecteurs du testeur bouclent avec deux bornes pour avoir une indication positive. Du fait que le dispositif de contrôle peut prendre cinq positions distinctes, on peut concevoir des séquences de positions déterminées pour le contrôle de la continuité selon un motif de conducteurs, le testeur devant fournir une indication positive dans certaines positions et négative dans les autres positions. Ici, on considère que le test est positif lorsque l'indication est positive uniquement dans la première et la deuxième position.

Dans une variante, le dispositif de contrôle comporte deux testeurs, non représenté mais d'apparence identique à celui de la figure 4, un premier testeur de continuité électrique entre le connecteur 35 et le connecteur 31, et un deuxième testeur de continuité entre les connecteurs 32 et 34. Les connecteurs 31 et 35 sont reliés électriquement entre eux de même que les connecteurs 32 et 34. Lorsque les connecteurs sont plaqués contre les bornes dans la première position, le premier testeur donne une indication positive parce qu'il détecte une continuité électrique passant par le connecteur 35, la borne 25, le conducteur 26, la borne 21 et le connecteur 31. Le deuxième testeur donne une indication négative. Dans la deuxième position, le premier testeur donne une indication positive parce qu'il détecte une continuité électrique passant par le connecteur 35, la borne 21, le conducteur 26, le conducteur 27, la borne 22 et le connecteur 31. Le deuxième testeur donne encore une indication négative. Lorsqu'on tourne le dispositif de contrôle d'un cinquième de tour supplémentaire dans le sens horaire pour atteindre une troisième position, les deux testeurs donne une indication négative.

Lorsqu'on tourne le dispositif de contrôle d'un cinquième de tour supplémentaire dans le sens horaire pour atteindre une quatrième position, le premier testeur donne une indication négative. Le deuxième testeur donne une indication positive en détectant une continuité électrique passant entre le connecteur 32, la borne 25, le conducteur 27, la borne 22 et le connecteur 34. Dans un troisième mode de réalisation, représenté sur la figure 5, l'objet 4 se distingue de celui de la figure 3 en ce qu'il comporte un conducteur entre les bornes 41, 45 et un autre entre les bornes 42, 44. Le dispositif de contrôle, non représenté mais d'apparence identique à celui de la figure 4, comporte un premier testeur de continuité électrique entre le connecteur 35 et le connecteur 31, et un deuxième testeur de continuité entre les connecteurs 32 et 34. Lorsque les connecteurs sont plaqués contre les bornes dans la première position, un contact électrique est établi entre le connecteur 31 et la borne 41, entre le connecteur 32 et la borne 42, entre le connecteur 34 et la borne 44 et entre le connecteur 35 et la borne 45. Le premier testeur donne alors une indication positive parce qu'il détecte une continuité électrique passant par le connecteur 35, la borne 45, le conducteur 46, la borne 41 et le connecteur 31. Le deuxième testeur donne également une indication positive parce qu'il détecte une continuité électrique passant par le connecteur 32, la borne 42, le conducteur 47, la borne 44 et le connecteur 34. En deuxième position, le premier testeur donne une indication positive du fait de la continuité électrique entre le connecteur 35, la borne 41, le conducteur 46, la borne 41 et le connecteur 31. On considère que le test est positif lorsque les deux testeurs donnent une indication positive en première position et seul le premier testeur donne une indication positive dans la deuxième position, les indications étant négatives dans les autres positions.

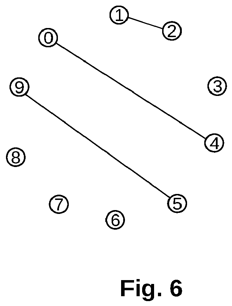

Dans un quatrième mode de réalisation, représenté sur la figure 6, l'objet se distingue de celui du deuxième mode de réalisation en ce qu'il comporte dix bornes, numérotées de 0 à 9 sur la figure 6, réparties aux sommets d'un décagone régulier. Des conducteurs relient les bornes 1-2, 4-10 et 5-9. Le même principe de vérification peut s'y appliquer avec un dispositif de contrôle comportant des connecteurs répartis aussi en décagone de même diamètre. L'invention n'est pas limitée aux modes de réalisation qui ont été décrits à titre d'exemple. Les surfaces portant les bornes ou les connecteurs ont été représentées planes, mais elles pourraient être en relief.

## Revendications

1. Objet anti-contrefaçon construit en fabrication additive par dépôt à l'état fondu d'une première matière isolante électriquement, **caractérisé en ce qu'**il comporte au moins un conducteur (15, 16, 17) en une deuxième matière conductrice intégré dans la première matière, le conducteur (15, 16, 17) reliant au moins deux bornes (11, 12, 13, 14) accessibles et ayant une résistance caractéristique mesurable entre les bornes (11, 12, 13, 14).

2. Objet selon la revendication 1, dans lequel au moins l'une des bornes (12, 13) est commune à deux conducteurs (15, 16, 17).

3. Objet selon la revendication 1 ou 2, dans lequel la deuxième matière comporte une matrice de matière thermoplastique et une charge sous forme de particules conductrices.

4. Objet selon l'une des revendications précédentes, dans lequel la valeur de résistance est supérieure à 1 kΩ, de préférence supérieure à 10 kΩ.

5. Procédé de fabrication d'un objet (1) anti-contrefaçon selon l'une des revendications précédentes, selon lequel on dépose une pluralité de couches à l'état fondu de la première matière isolante électriquement, **caractérisé en ce qu'**on dépose en outre la deuxième matière conductrice pour réaliser au moins un conducteur (15, 16, 17) intégré dans la première matière reliant au moins deux bornes accessibles (11, 12, 13, 14).

6. Procédé de fabrication selon la revendication 5, selon lequel on fabrique un lot d'objets, et on modifie, d'un objet (1) à l'autre, au moins l'un des paramètres pour au moins l'un des conducteurs (15, 16, 17) dans un groupe comprenant le parcours du conducteur, la section du conducteur sur au moins une partie du parcours, la matière du conducteur, et un nombre de passes de réalisation du conducteur, de sorte à modifier la valeur de résistance dudit conducteur.

7. Procédé d'authentification d'un objet parmi le lot d'objets fabriqués selon le procédé de la revendication 6, selon lequel, pour chaque objet (1) du lot, on mesure la valeur de résistance de chaque conducteur (15, 16, 17) entre les bornes (11, 12, 13, 14) après la fabrication et on tient un registre en créant un enregistrement des valeurs mesurées pour l'objet (1), puis on considère que l'objet à authentifier est authentique si les valeurs de résistance mesurées pour chacun des conducteurs (15, 16, 17) dudit objet à authentifier correspondent aux valeurs de l'un des enregistrements du registre.

8. Procédé d'authentification d'un objet parmi le lot d'objets fabriqués selon le procédé de la revendication 6, selon lequel on utilise un dispositif de contrôle comportant autant de connecteurs que l'objet a de bornes, le dispositif étant configuré pour que chaque connecteur soit en contact avec l'une des bornes de l'objet dans une position de contrôle, le dispositif de contrôle comportant au moins un testeur de continuité électrique entre au moins deux connecteurs, le testeur donnant une indication positive lorsqu'il détecte une continuité électrique fournie par l'objet entre deux connecteurs.

9. Procédé selon la revendication 8, selon lequel les bornes sont réparties selon un motif répété régulièrement autour d'un axe de manière à répéter des positions de contrôle, et on considère que l'objet est valide si chaque testeur donne une indication positive ou négative prédéterminée pour chacune des positions de contrôle du dispositif de contrôle.
